# EUROPÄISCHE PATENTANMELDUNG

(11) **EP 3 967 453 A2**
(43) Veröffentlichungstag der Anmeldung: **16.03.2022**
(21) Anmeldenummer: 21185710.7
(22) Anmeldetag: 15.07.2021
(51) Int. Cl.: B25B 1/24, B25B 5/16, G01N 3/04, G01N 3/08

(54) **SPANNBACKE, EINSPANNVORRICHTUNG UND ZUGPRÜFMASCHINE**

(30) Priorität: 22.07.2020 DE 102020119302
(71) Anmelder: Scherdel Innotec Forschungs- Und Entwicklungs GmbH, 95615 Marktredwitz (DE)
(72) Erfinder: Dr. Konrad, Christian, 95679 Waldershof (DE)
(74) Vertreter: Schmitt-Nilson Schraud Waibel Wohlfrom Patentanwälte Partnerschaft mbB

(57) **Zusammenfassung**

Eine erfindungsgemäße Spannbacke (2) für eine Einspannvorrichtung (14, 30, 36) zum Einspannen eines auf Zug zu belastenden Werkstoffes, insbesondere eines hochfesten Federdrahts oder eines hochfesten Bandmaterials, umfasst
einer Spannbacken-Einspann-Oberfläche (4) mit einem ersten Oberflächenbereich (8) benachbart einer Austrittsseite und mit einem zweiten Oberflächenbereich (10);
wobei der erste Oberflächenbereich (8) und der zweite Oberflächenbereich (10) jeweils eine Oberflächenstruktur mit einem Muster aus Vertiefungen (20) und Erhöhungen (18) aufweisen;
wobei der erste Oberflächenbereich (8) eine feinere Oberflächenstruktur aufweist als der zweite Oberflächenbereich (10);
wobei die Erhöhungen (18) und Vertiefungen (20) des ersten Oberflächenbereichs (8) mit feinerer Oberflächenstruktur kleinere Abmessungen aufweisen als die Erhöhungen (18) und Vertiefungen (20) des zweiten Oberflächenbereichs (10) mit gröberer Oberflächenstruktur; und
wobei die Höhe der Erhöhungen (18) aus der Grundebene heraus sowohl für den ersten Oberflächenbereich (8) mit feinerer Oberflächenstruktur als auch für den zweiten Oberflächenbereich (10) mit gröberer Oberflächenstruktur im Wesentlichen die gleiche ist.

## Beschreibung

Die vorliegende Erfindung betrifft eine Spannbacke für eine Einspannvorrichtung zum Einspannen eines auf Zug zu belastenden Werkstoffes, insbesondere eines hochfesten Federdrahts oder eines hochfesten Bandmaterials, eine Einspannvorrichtung zum Einspannen eines solchen auf Zug zu belastenden Werkstoffes, insbesondere hochfesten Federdrahts oder hochfesten Bandmaterials mit wenigstens einer solchen Spannbacke sowie eine Zugprüfmaschine für einen solchen auf Zug zu belastenden, insbesondere zu prüfenden Werkstoff, insbesondere für einen hochfesten Federdraht oder für ein hochfestes Bandmaterial mit einer solchen Einspannvorrichtung.

Bei einer Zugprüfung von hochfestem Federdraht oder hochfestem Bandmaterial wird dieses zwischen zwei Spannköpfen eingespannt. Danach wird z. B. der untere Spannkopf von dem oberen Spannkopf gleichmäßig wegbewegt und der Federdraht oder das Bandmaterial dabei bis zum Bruch gedehnt. Die Verlängerung des Federdrahts / Bandmaterials und die Kraft werden gemessen. Anhand dessen kann eine Aussage über den Federdraht / das Bandmaterial z. B. mithilfe das Kraft-weg-Diagramms oder des Spannungs-Dehnungs-Diagramms getroffen werden.

Die Anforderungen an hochfeste Federdrähte und hochfeste Bandmaterialien steigen. Damit steigen auch die Anforderungen an eine Zugprüfung. Solche Zugprüfungen gestalten sich daher zunehmend schwierig. Es kommt zu einem Durchrutschen z. B. bei hochfestem dünnen Bandmaterialien, oder zu einem Bruch des überprüften Federdrahts / Bandmaterials, lange bevor die maximale Dehnung erreicht ist.

Es ist daher eine Aufgabe der vorliegenden Erfindung, eine Spannbacke und eine Einspannvorrichtung anzugeben, mit denen auf Zug zu belastende Werkstoffe, insbesondere hochfeste Federdrähte und hochfeste Bandmaterialien zuverlässig, insbesondere durchrutschsicher und beschädigungsarm eingespannt werden können. Des Weiteren soll eine Zugprüfmaschine angegeben werden, mit der Werkstoffe, insbesondere hochfeste Federdrähte und Bandmaterialien zuverlässig überprüft werden können.

Diese Aufgabe wird durch den Gegenstand der unabhängigen Patentansprüche gelöst. Vorteilhafte Weiterbildungen ergeben sich aus den abhängigen Patentansprüchen.

Eine erfindungsgemäße Spannbacke für eine Einspannvorrichtung zum Einspannen eines auf Zug zu belastenden Werkstoffes, insbesondere eines hochfesten Federdrahts oder eines hochfesten Bandmaterials, umfasst eine Spannbacken-Einspann-Oberfläche mit einem ersten Oberflächenbereich benachbart einer Austrittsseite und mit einem zweiten Oberflächenbereich. Der erste Oberflächenbereich und der zweite Oberflächenbereich weisen jeweils eine Oberflächenstruktur mit einem Muster aus Vertiefungen und Erhöhungen auf. Der erste Oberflächenbereich weist eine feinere Oberflächenstruktur auf als der zweite Oberflächenbereich. Die Erhöhungen und Vertiefungen des ersten Oberflächenbereichs mit feinerer Oberflächenstruktur weisen kleinere Abmessungen auf als die Erhöhungen und Vertiefungen des zweiten Oberflächenbereichs mit gröberer Oberflächenstruktur. Die Höhe der Erhöhungen aus der Grundebene heraus ist sowohl für den ersten Oberflächenbereich mit feinerer Oberflächenstruktur als auch für den zweiten Oberflächenbereich mit gröberer Oberflächenstruktur im Wesentlichen die gleiche.

Gemäß einer ersten, der Erfindung zugrunde liegenden Erkenntnis der Erfinder liegt der Grund, warum bei Federdrähten und bei Bandmaterialien die Tendenz zu hoch- und höherfesten Federdrähten und Bandmaterialien geht, darin, dass diese später reißen und daher für anspruchsvollere Anwendungen geeignet sind.

Gleichzeitig erhöht deren Verwendung aber auch die Anforderungen an die durchzuführende Zugprüfung. Bei herkömmlichen Spannbacken und Einspannvorrichtungen hat sich gezeigt, dass z. B. hochfeste dünne Bandmaterialien häufig nicht gut genug zwischen den Spannbacken gehalten werden und diese durchrutschen, wenn die auf das eingespannte Ende des Werkstoffes einwirkende Zugkraft zu groß wird. Dies erschwert eine Zugprüfung oder macht diese sogar unmöglich.

Gemäß einer weiteren, der Erfindung zugrunde liegenden Erkenntnis der Erfinder reißt der Werkstoff, insbesondere der Federdraht / das Bandmaterial bei einer Zugprüfung häufig nicht in einem mittleren Bereich zwischen den beiden Einspannvorrichtungen, sondern unmittelbar am Austritt der Einspannvorrichtung, also am Übergang Einspannung zu freier Länge, was auch als Einspannbruch bezeichnet werden kann.

Dies kommt häufig bei Fällen vor, bei denen ein Werkstoff zur Vermeidung eines Durchrutschens mit stärkerer Einspannung zwischen den Spannbacken eingespannt wird.

Gemäß einem Grundgedanken der Erfindung können Werkstoffe wie hochfeste Federdrähte und hochfeste Bandmaterialien dadurch zuverlässig zuggeprüft werden, unter Vermeidung eines Durchrutschens und unter Vermeidung von sogenannten Einspannbrüchen, indem eine Spannbacken-Einspann-Oberfläche mit einem ersten Oberflächenbereich benachbart einer Austrittsseite und mit einem zweiten Oberflächenbereich versehen wird, wobei der erste Oberflächenbereich und der zweite Oberflächenbereich jeweils eine Oberflächenstruktur mit einem Muster aus Vertiefungen und Erhöhungen aufweisen und wobei der erste Oberflächenbereich eine feinere Oberflächenstruktur als der zweite Oberflächenbereich aufweist. Diese feinere Struktur ermöglicht eine abgestimmte Krafteinleitung, ohne dass es zu bruchauslösenden Abdrücken an dem zu prüfenden Werkstoff kommt.

Dadurch wird ein guter Griff der Spannbacke ermöglicht und somit ein Durchrutschen vermieden.

Zusammen mit der feineren Oberflächenstruktur des ersten Oberflächenbereichs benachbart der Austrittsseite kann so ein Einspannbruch zuverlässig vermieden werden.

Eine Hauptaufgabe des zweiten, gröber strukturierten Oberflächenbereichs mit der gröberen Oberflächenstruktur ist das zuverlässige und verrutschsichere Halten des Werkstoffes bzw. Materials bei gleichzeitiger Minimierung der in diesen einzubringenden Verformung.

Eine Hauptaufgabe des ersten, feiner strukturierten Oberflächenbereichs ist es, die Oberfläche des zu halternden Werkstoffes noch weniger zu verändern, um so einen Einspannbruch zu verhindern. Gleichzeitig hat der erste Oberflächenbereich auch eine Einspann- und Haltefunktion, die jedoch geringer als diejenige des zweiten Oberflächenbereichs ausgebildet ist.

Die Abmessungen der Strukturen dieser strukturierten Oberflächenbereiche sind sehr klein, wie dies nachfolgend noch erläutert werden wird.

Durch die kleinen Abmessungen der Strukturen in dem ersten und zweiten Oberflächenbereich der Oberfläche der Spannbacke wird eine Beschädigung der Oberfläche des zu prüfenden Werkstoffes, wie sie häufig bei grob verzahnten Oberflächen von Spannbacken auftritt, zuverlässig vermieden und Einspannbrüche werden demgegenüber auf ein Minimum reduziert.

Die Spannbacken-Einspann-Oberfläche kann auch als Spannbacken-Wirk-Oberfläche bezeichnet werden.

Grundsätzlich können die erfindungsgemäß strukturierten Spannbacken für alle Materialien oder Bauteile angewendet werden. Einen besonders gut geeigneten Spezialfall stellen dabei die hochfesten Federdrähte und hochfesten Bandmaterialien dar.

Ebene und nicht ebene Spannflächen können erfindungsgemäß strukturiert werden. Es ist auch ein nur partielles Strukturieren möglich, z.B. die Seitenflächen von Nuten in Spannbacken.

Die Spannbacke kann zusätzlich zum ersten, feiner strukturierten Oberflächenbereich und zum zweiten, gröber strukturierten Oberflächenbereich auch ein oder mehrere zusätzliche, strukturierte oder unstrukturierte Oberflächenbereiche aufweisen.

Die Erfindung betrifft auch eine Einspannvorrichtung zum Einspannen eines auf Zug zu belastenden Werkstoffes, insbesondere eines hochfesten Federdrahts oder eines hochfesten Bandmaterials mit zwei gegeneinander spannbaren Spannbacken, wobei wenigstens eine von diesen nach der erfindungsgemäßen Art ausgebildet ist.

Die Spannbacken können dabei mechanisch, motorisch, pneumatisch oder hydraulisch gegeneinander spannbar sein.

Bei einer einfachen Ausführung kann es ausreichen, wenn nur eine der Spannbacken über einen ersten strukturierten Oberflächenbereich benachbart der Austrittsseite mit einer feineren Oberflächenstruktur und über einen zweiten Oberflächenbereich mit einer gröberen Oberflächenstruktur verfügt, und die gegenüberliegende Spannbacke mit einer üblichen Oberfläche ausgestattet ist.

Besonders gute Ergebnisse werden jedoch erzielt, wenn beide gegenüberliegenden Spannbacken gemäß der erfindungsgemäßen Art ausgebildet sind und so gegenüber voneinander angeordnet sind, dass ihre ersten und zweiten Oberflächenbereiche insbesondere deckungsgleich einander gegenüber liegen.

Eine erfindungsgemäße Spannbacke und eine erfindungsgemäße Einspannvorrichtung können überall dort eingesetzt werden, wo Werkstoffe, insbesondere hochfeste Werkstoffe wie hochfeste Federdrähte und hochfeste Bandmaterialien auf Zug belastet werden. Generell können erfindungsgemäße Spannbacken und erfindungsgemäße Einspannvorrichtungen bei allen Anwendungen zum Einsatz kommen, bei denen Bauteile zuverlässig, insbesondere durchrutschsicher, beschädigungsfrei und gegen eine Zugbeanspruchung gehaltert werden müssen.

Eine bevorzugte Anwendung einer erfindungsgemäßen Spannbacke und einer erfindungsgemäßen Einspannvorrichtung ist die Zugprüfung von hochfesten Werkstoffen wie hochfesten Federdrähten und hochfesten Bandmaterialien.

Eine weitere typische Anwendung einer erfindungsgemäßen Spannbacke und einer erfindungsgemäßen Einspannvorrichtung ist ein Niederhalter beim Tiefziehen.

Gemäß einer ersten Ausführungsform ist der erste Oberflächenbereich mit der feineren Oberflächenstruktur zur Vermeidung von zu großen Eindruckspuren in den Werkstoff ausgebildet, und der zweite Oberflächenbereich mit der gröberen Oberflächenstruktur ist zur Aufbringen einer hohen Spannkraft auf den Werkstoff in Zusammenwirkung mit einer gegenüberliegenden Spannbacke ausgebildet.

Gemäß einer weiteren Ausführungsform weist die Oberflächenstruktur des ersten und/oder zweiten Oberflächenbereichs ein insbesondere regelmäßiges Muster aus Erhöhungen und/oder Vertiefungen auf.

Ein solches regelmäßiges Muster kann automatisiert in die Oberfläche einer Spannbacke, z. B. durch automatisches Abfahren der Oberfläche der Spannbacke durch einen abtragenden Laserstrahl erzeugt werden. Des Weiteren ist somit die gesamte Breite der Spannbacke gleich gut für die Einspannung des Werkstoffes geeignet.

Gemäß einer weiteren Ausführungsform der Erfindung ist die Oberflächenstruktur des ersten und zweiten Oberflächenbereichs jeweils durch eine Laserstrukturierung, durch Erodieren oder durch Fräsen, insbesondere durch Hartfräsen erzeugt worden.

Eine Erzeugung der Oberflächenstruktur des ersten und zweiten Oberflächenbereichs durch eine Laserstrukturierung, kann dadurch erzeugt werden, indem ein materialabtragender Laserstrahl die Oberfläche des ersten und zweiten Oberflächenbereichs abfährt und jeweils ein Muster aus Vertiefungen und Erhöhungen in den ersten Oberflächenbereich mit der feineren Oberflächenstruktur und in den zweiten Oberflächenbereich mit der gröberen Oberflächenstruktur einbringt. Dies ist verhältnismäßig kostengünstig und automatisierbar durchführbar.

Die so mit Oberflächenstrukturen versehenen ersten und zweiten Oberflächenbereiche können als laserstrukturierte Oberflächenbereiche bezeichnet werden.

Das Erodieren oder Fräsen, insbesondere Hartfräsen stellen jedoch gute alternative Herstellungsarten dar.

Gemäß einer weiteren Ausführungsform weisen die Erhöhungen und/oder Vertiefungen eine Oberfläche mit einer Bahnstruktur auf, insbesondere mit einer wenigstens bereichsweise durchgehenden Laserstrahlbahn mit einem vertieftem Abschnitt und wenigstens einem erhöhten Randabschnitt. Die Breite der Laserstrahlbahn kann dabei im Bereich von 1 µm bis 100 µm liegen.

Durch eine stark vergrößerte Ansicht der Oberfläche der Spannbacke z. B. mit einem Rasterelektronenmikroskop kann die feine Bahnstruktur des Laserstrahls gut erkannt werden. Diese feine Bahnstruktur ist durch Laserstrahlabtragung der zwei Oberflächenbereiche der Spannbacke erzeugt worden. Der Verlauf des Laserstrahls, der diese Laserstrukturierung erzeugt hat, kann anhand der Laserstrahlbahn gut verfolgt werden.

Gemäß einer weiteren Ausführungsform stehen die Erhöhungen sowohl des ersten Oberflächenbereichs mit feinerer Oberflächenstruktur als auch des zweiten Oberflächenbereichs mit gröberer Oberflächenstruktur aus einer Grundebene heraus, insbesondere mit Abmessungen im Bereich von 10 µm bis 500 µm. Bei dieser Variante ist die Bezugsebene die Grundebene, die der Ebene der Vertiefungen entspricht. Aus dieser stehen die Erhöhungen mit den angegebenen Abmessungen nach oben heraus.

Gemäß einer weiteren Ausführungsform erstrecken sich die Vertiefungen sowohl des ersten Oberflächenbereichs mit feinerer Oberflächenstruktur als auch des zweiten Oberflächenbereichs mit gröberer Oberflächenstruktur aus der Ebene der Oberfläche bis zu einer Tiefe von 10 µm bis 500 µm in die Spannbacke hinein. Bei dieser Variante ist die Grundebene die Ebene der Oberfläche bzw. der erhabenen Bereiche der Oberfläche, aus der sich die Vertiefungen bis zu einer Tiefe mit den angegebenen Abmessungen in die Spannbacke hinein erstrecken.

Gemäß einer weiteren Ausführungsform sind die Erhöhungen jeweils zahnförmig, kegelförmig, pyramidenförmig, zellenförmig, noppenförmig oder wabenförmig ausgebildet.

Die Erhöhungen sind, was ihre Fläche betrifft, sehr klein dimensioniert. Jede einzelne Erhöhung nimmt nur jeweils eine Fläche von 200 µm² bis 2 mm² des ersten und/oder zweiten Oberflächenbereichs ein.

Die Erhöhungen in dem ersten Oberflächenbereich mit feinerer Oberflächenstruktur können dabei einen Durchmesser von etwa 400 bis 500 µm aufweisen und die Erhöhungen in dem zweiten Oberflächenbereich mit gröberer Oberflächenstruktur können dabei einen Durchmesser von 800 µm bis 1 mm aufweisen.

Gemäß einer weiteren Ausführungsform ist die Oberflächenstruktur des ersten und/oder zweiten Oberflächenbereichs als Zellstruktur oder als Noppenstruktur ausgebildet, mit einem insbesondere gleichmäßigen Muster von aus einer Oberfläche herausstehenden Zellen oder Noppen.

Gemäß einer weiteren Ausführungsform ist die Oberflächenstruktur des ersten und/oder zweiten Oberflächenbereichs als Wabenstruktur oder als Hexagonstruktur ausgebildet, mit einem insbesondere gleichmäßigen Muster aus Erhebungen in Waben- oder Hexagonalform und aus einem Netz von diese umgebenden Gräben. Gemäß einer weiteren Ausführungsform ist die Oberflächenstruktur des ersten und/oder zweiten Oberflächenbereichs als Riffelstruktur ausgebildet, mit einer Vielzahl von Erhebungen, insbesondere unterschiedlicher Form und/oder Größe und mit einem Netz aus diese umgebenden Gräben.

Gemäß einer weiteren Ausführungsform ist die Oberflächenstruktur des ersten und/oder zweiten Oberflächenbereichs als Kreisnutenstruktur ausgebildet, mit einem insbesondere gleichmäßigen Muster aus ringförmigen Vertiefungen in einer Oberfläche.

An dieser Stelle ist zu betonen, dass gemäß einer Ausführungsform der Erfindung der erste, feiner laserstukturierte und der zweite, gröber laserstukturierte Oberflächenbereich jeweils mit einer Oberflächenstruktur vom gleichen Typ ausgebildet sein können. Der erste, feiner laserstukturierte Oberflächenbereich und der zweite, gröber laserstukturierte Oberflächenbereich können beide, z. B. Erhöhungen und/oder Vertiefungen jeweils zahnförmiger, kegelförmiger, pyramidenförmiger, zellenförmiger, noppenförmiger, wabenförmiger oder hexagonalstrukturierter, riffelstrukturierter oder kreisnutenstrukturierter Gestalt haben, jedoch beim ersten, feiner laserstukturierten Oberflächenbereich mit kleineren Abmessungen.

An dieser Stelle ist jedoch ausdrücklich betont und mit offenbart, dass für den erste, feiner laserstukturierten und der zweiten, gröber laserstukturierten Oberflächenbereich auch unterschiedliche Strukturen gewählt werden können, z. B. Noppenstruktur für den ersten Oberflächenbereich und Wabenstruktur oder Hexagonalstruktur für den zweiten Oberflächenbereich. Grundsätzlich sind alle solche Kombinationen ausdrücklich mit offenbart.

Gemäß einer weiteren Ausführungsform weist die Spannbacke eine Austrittskante auf, über die der einzuspannende Werkstoff die Oberfläche der Spannbacke verlässt. Der erste Oberflächenbereich mit der feineren Oberflächenstruktur zur Vermeidung von zu großen Eindruckspuren in den Werkstoff ist dabei insbesondere benachbart der Austrittskante angeordnet ist. Der zweite Oberflächenbereich mit der gröberen Oberflächenstruktur ist insbesondere neben dem ersten Oberflächenbereich mit der feineren Oberflächenstruktur und beabstandet von der Austrittskante, insbesondere angrenzend an eine rückwärtigen Kante der Oberfläche der Spannbacke, die der Austrittskante gegenüberliegt, angeordnet.

Dadurch ist die Anordnung der ersten und zweiten Oberflächenbereiche bzgl. der Oberfläche der Spannbacke besonders vorteilhaft definiert.

Gemäß einer weiteren Ausführungsform nimmt der erste Oberflächenbereich mit der feineren Oberflächenstruktur und der zweite Oberflächenbereich mit der gröberen Oberflächenstruktur jeweils einem rechteckigen Bereich der Oberfläche der Spannbacke ein.

Durch die rechteckige Ausbildung des ersten und zweiten Oberflächenbereichs können zu halternde Federdrähte / Bandmaterialien über die gesamte Breite der Spannbacke ohne Unterschied eingespannt werden. Zudem ist die Herstellung einer Spannbacke bzw. das Versehen der Oberfläche der Spannbacke mit solchen rechteckigen ersten und zweiten Oberflächenbereichen auf einfache Weise möglich.

Die Fläche des ersten Oberflächenbereichs mit der feineren Oberflächenstruktur nimmt üblicherweise einen geringeren Bereich der Oberfläche der Spannbacke ein als der zweite Oberflächenbereich mit der gröberen Oberflächenstruktur. Die von dem ersten Oberflächenbereich mit der feineren Oberflächenstruktur eingenommene Bereich der Gesamtoberfläche der Spannbacke entspricht etwa 10 - 30 % der Oberfläche der Spannbacke.

Gemäß einer weiteren Ausführungsform liegen der erste Oberflächenbereich und der zweite Oberflächenbereich in einer Ebene.

Gemäß einer weiteren Ausführungsform sind der erste Oberflächenbereich und der zweite Oberflächenbereich in einer rinnenartigen Aufnahme oder Vertiefung der Oberfläche der Spannbacke ausgebildet sind. Die rinnenartige Aufnahme oder Vertiefung kann sich dabei längs über die gesamte Oberfläche der Spannbacke erstrecken. Die rinnenartige Aufnahme oder Vertiefung kann im Querschnitt gesehen gerundet oder spitz zulaufend ausgeführt sein.

Somit kann ein einzuspannender und insbesondere auf Zug zu überprüfender Werkstoff, insbesondere ein hochfester Federdraht oder ein hochfestes Bandmaterial besonders zuverlässig in einer solchen rinnenartigen Aufnahme oder Vertiefung in der Spannbacke, insbesondere in einander fluchtend gegenüberliegenden rinnenartigen Aufnahmen oder Vertiefungen von einander gegenüberliegenden Spannbacken aufgenommen werden.

Bei dieser Ausführungsform reicht es aus, wenn nur die rinnenartigen Aufnahme oder Vertiefung einen ersten Oberflächenbereich und einen zweiten Oberflächenbereich aufweisen, die jeweils eine Oberflächenstruktur mit einem Muster aus Vertiefungen und Erhöhungen hat, wobei der erste Oberflächenbereich eine feinere Oberflächenstruktur als der zweite Oberflächenbereich aufweist.

Vorzugsweise haben beide einander gegenüberliegenden rinnenartigen Aufnahmen oder Vertiefungen einen ersten Oberflächenbereich und einen zweiten Oberflächenbereich, die jeweils eine Oberflächenstruktur mit einem Muster aus Vertiefungen und Erhöhungen haben, und der erste Oberflächenbereich besitzt jeweils eine feinere Oberflächenstruktur als der zweite Oberflächenbereich.

Zudem kann sich der erste Oberflächenbereich mit der feineren Oberflächenstruktur und der zweite Oberflächenbereich mit der gröberen Oberflächenstruktur auch über die plane Oberfläche der Spannbacke, die jeweils an die rinnenartige Aufnahme oder Vertiefung angrenzt, erstrecken.

Gemäß einer weiteren Ausführungsform grenzen der erste und der zweite Oberflächenbereich übergangsbereichslos aneinander an.

Alternativ dazu ist zwischen dem ersten und dem zweiten Oberflächenbereich ein Übergangsbereich angeordnet.

Bei einem Übergangsbereich kann z. B. das Laserstrukturmuster des ersten Oberflächenbereichs kontinuierlich in das Laserstrukturmuster des zweiten Oberflächenbereichs übergehen. Es kann/können auch ein drittes oder sogar mehrere Übergangsmuster vorgesehen sein.

Die Erfindung betrifft auch eine Zugprüfmaschine für einen Werkstoff, insbesondere für einen hochfesten Federdraht oder für ein hochfestes Bandmaterial, aufweisend eine obere Einspannvorrichtung zum Einspannen des oberen Endes des Werkstoffes, insbesondere eines hochfesten Federdrahts oder eines hochfesten Bandmaterials; eine untere Einspannvorrichtung des unteren Endes des Werkstoffes, insbesondere des hochfesten Federdrahts oder des hochfesten Bandmaterials; eine Antriebseinheit, insbesondere eine Antriebsspindel oder ein Antriebskolben, die dazu angeordnet und ausgebildet ist, die untere Einspannvorrichtung von der oberen Einspannvorrichtung oder die obere Einspannvorrichtung von der unteren Einspannvorrichtung wegzubewegen und die Distanz der Wegbewegung zu messen; und ein Kraftmesssystem, das insbesondere mit der oberen Einspannvorrichtung oder der unteren Einspannvorrichtung verbunden und dazu ausgebildet ist, die Kraft bis zum Bruch des Werkstoffes, insbesondere des hochfesten Federdrahts oder des hochfesten Bandmaterials zu messen. Dabei ist wenigstens eine der oberen und unteren Einspannvorrichtung nach der erfindungsgemäßen Art ausgebildet und so angeordnet ist, dass der oder die ersten Oberflächenbereiche mit der feineren Oberflächenstruktur zu der jeweils gegenüberliegenden Einspannvorrichtung hin gerichtet ist/sind.

Mit einer solchen Zugprüfmaschine werden charakteristische Kenngrößen von Werkstoffen oder Materialien geprüft, gemessen und bestimmt, insbesondere die Spannung, die Dehnung und das Elastizitätsmodul.

Eine Zugprüfmaschine kann des Weiteren noch über ein Gestell verfügen, insbesondere mit zwei Säulen mit einem, insbesondere unteren oder oberen ortsfesten Querhaupt, an dem ein Kraftmesssystem, insbesondere eine Kraftmessdose befestigt ist und an das/die sich nach unten hin die obere Einspannvorrichtung anschließt sowie mit einer oberen oder unteren, insbesondere nach unten und oben bewegbaren Traverse / einem oberen oder unteren, insbesondere nach unten und oben bewegbaren Querhaupt, an der/dem nach oben hin die untere Einspannvorrichtung angebracht ist.

Somit kann einer der beiden Einspannvorrichtungen gegenüber der anderen Einspannvorrichtung nach unten und oben bewegt werden.

Des Weiteren kann ein Extensometer vorgesehen sein.

Bei einer solchen Zugprüfmaschine wird ein Prüfling, also ein zu prüfender Werkstoff, insbesondere ein zu prüfender hochfester Federdraht oder ein zu prüfendes hochfestes Bandmaterialstück, z. B. in der Länge von 300 - 400 mm zwischen den zwei Einspannvorrichtungen eingespannt, dann werden die Einspannvorrichtungen voneinander wegbewegt. Die Längung des Werkstoffes bis zum Bruch sowie die aufgewendete Kraft werden gemessen. Die so gemessenen Werte können in einem Kraft-Weg-Diagramm oder in einem Spannungs-Dehnungs-Diagramm dargestellt werden. Die charakteristischen Größen, insbesondere die Spannung, die Dehnung und das Elastizitätsmodul des Werkstoffes können so bestimmt werden.

Durch die Verwendung wenigstens einer erfindungsgemäßen Spannbacke bzw. wenigstens einer erfindungsgemäßen Einspannvorrichtung für die untere und / oder obere Einspannvorrichtung der Zugprüfmaschine können auch hochfeste Federdrähte und Bandmaterialien zuverlässig zuggeprüft werden. Durch die Spannbacken wird einerseits ein Durchrutschen und andererseits ein Einspannbruch direkt an der Austrittskante der entsprechenden Einspannvorrichtung zuverlässig vermieden.

Als Material für die Spannbacken eignet sich ein Hartmetall oder ein gehärteter Stahl. Dieser ist entweder ohne nachträgliche Wärmebehandlung ausgeführt oder nur verzugsarm oder verzugslos wärmebehandelt.

Auf die Oberfläche der Spannbacken kann insbesondere durch ein PVD (physical vapor deposition)- oder ein CVD (chemical vapor deposition)-Abscheideverfahren eine dünne Hartstoffschicht mit einer Dicke von wenigen Mikrometern abgeschieden werden und so die Verschleißbeständigkeit erhöht werden. Die Oberfläche der Spannbacke wird in diesem Fall von einer solchen abgeschiedenen Hartstoffschicht gebildet. Die strukturierten ersten und zweiten Oberflächenbereiche sind unabhängig von dem Vorhandensein einer solchen abgeschiedenen Hartstoffschicht sichtbar.

Die Erfindung ist nachfolgend anhand von Ausführungsbeispielen mit Bezug auf die beiliegenden Figuren näher erläutert.
Figur 1 zeigt in ihrer Teilfigur 1(a) eine schematische perspektivische Ansicht einer Spannbacke gemäß einem Ausführungsbeispiel der Erfindung schräg von vorne; und in ihrer Teilfigur 1(b) eine schematische perspektivische Ansicht der Spannbacke aus Figur 1(a) schräg von hinten.
Figur 2 zeigt eine Draufsicht auf die vordere Spannbacken-Einspann-Oberfläche der Spannbacke aus Figur 1.
Figur 3 zeigt eine schematische Ansicht schräg von oben auf eine Einspannvorrichtung zum Einspannen eines Werkstoffes, insbesondere hochfesten Federdrahts oder hochfesten Bandmaterials.
Figur 4 zeigt in ihrer Teilfigur 4(a) einen vergrößerten Ausschnitt eines Teils des zweiten Oberflächenbereichs mit gröberer Oberflächenstruktur und in ihrer Teilfigur 4(b) einen stark vergrößerten Ausschnitt des zweiten Oberflächenbereichs mit feinerer Oberflächenstruktur der Spannbacke aus den Figuren 1 und 2.
Figur 5 zeigt Draufsichten auf andere exemplarische laserstrukturierte Oberflächenstrukturen für den ersten Oberflächenbereich mit feiner Oberflächenstruktur und / oder den zweiten Oberflächenbereich mit gröberer Oberflächenstruktur, nämlich eine Zellstruktur (Figur 5(a)); eine Noppenstruktur (Figur 5(b)); eine Wabenstruktur (Figur 5(c)); eine Hexagonstruktur (Figur 5(d)); eine Riffelstruktur (Figur 5(e)), und eine Kreisnutenstruktur (Figur 5(f)).
Figur 6 zeigt eine schematische Vorderansicht einer Zugprüfmaschine.
Figur 7 zeigt in ihrer Teilfigur 7 (a) eine perspektivische Ansicht schräg von vorne auf eine Spannbacke gemäß einem weiteren Ausführungsbeispiel der Erfindung; und anhand ihrer Teilfigur 7 (b) eine Seitenansicht einer Einspannvorrichtung mit einem eingespannten Prüfling.

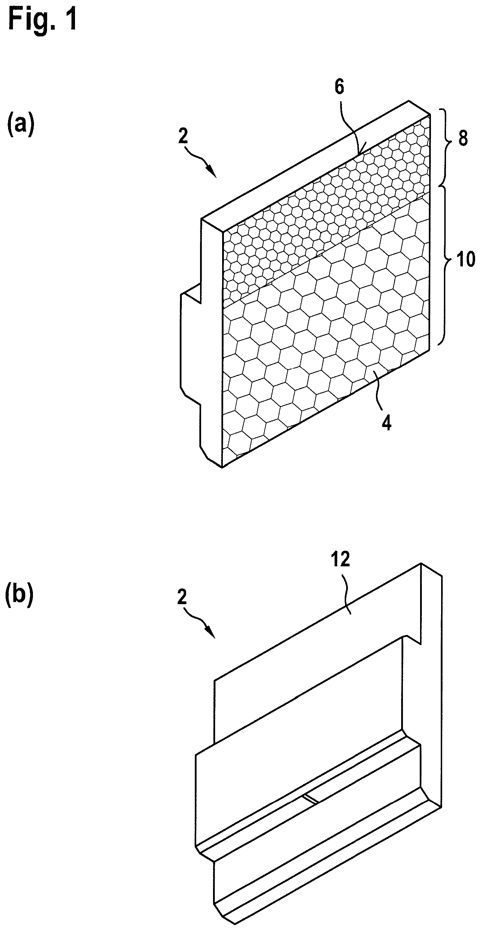

Figur 1 zeigt in ihrer Teilfigur 1(a) eine schematische perspektivische Ansicht einer Spannbacke 2 schräg von vorne; und in ihrer Teilfigur 1(b) eine schematische perspektivische Ansicht der Spannbacke 2 aus Figur 1(a) schräg von hinten.

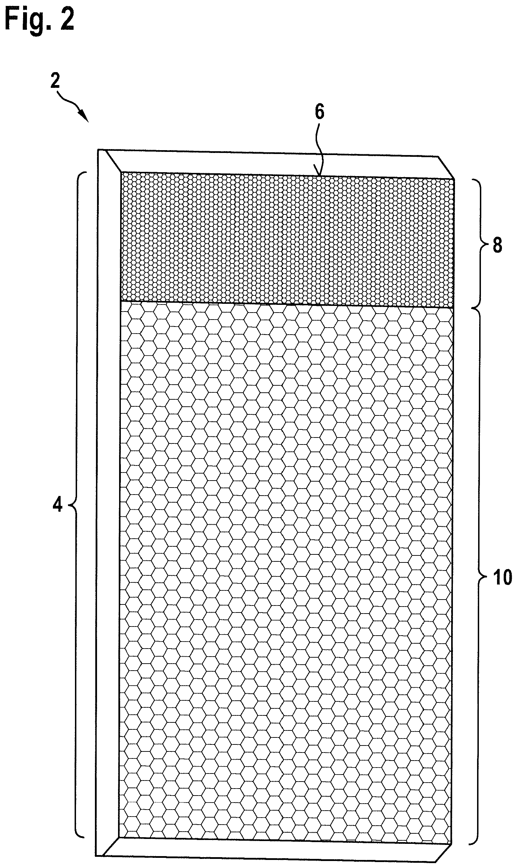

Figur 2 zeigt eine Draufsicht auf die vordere Spannbacken-Einspann-Oberfläche 4 der Spannbacke 2 aus Figur 1.

Die Spannbacke 2 umfasst eine im Wesentlichen rechteckige vordere Spannbacken-Einspann-Oberfläche 4, deren obere Kante bzw. obere rechtwinklig zu dieser angeordnete Stirnfläche die Austrittsseite 6 für einen von der Spannbacke 2 und von einer hier nicht gezeigten, gegenüberliegenden Spannbacke einzuspannenden Prüfling bzw. Werkstoff (hochfester Federdraht oder hochfestes Bandmaterial) bildet.

Nachfolgend wird als Beispiel für einen solchen Prüfling oder Werkstoff von einem hochfesten Federdraht oder einem hochfesten Bandmaterial gesprochen. Es versteht sich aber von selbst, dass auch andere Prüflinge oder Werkstoffe vorgesehen und auf Zug getestet werden können.

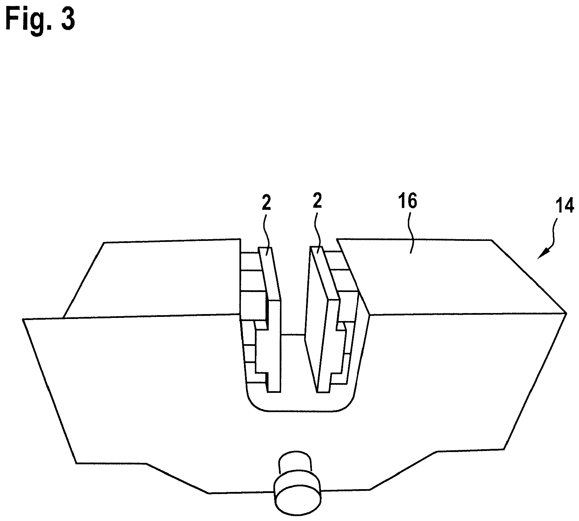

Der obere Abschnitt der Spannbacken-Einspann-Oberfläche 4 bildet einen ersten Oberflächenbereich mit feinerer Oberflächenstruktur 8, und der untere Abschnitt der vorderen Spannbacken-Einspann-Oberfläche 4 bildet einen zweiten Oberflächenbereich mit gröberer Oberflächenstruktur 10. Die Rückseite 12, welche der Spannbacken-Einspann-Oberfläche 4 gegenüberliegt, ist von der Gestalt her an eine entsprechende Aufnahme eines Antriebs (16, siehe Figur 3) einer Einspannvorrichtung (14, siehe Figur 3) angepasst. Im vorliegenden, nicht beschränkenden Ausführungsbeispiel ist die Rückseite 12 mit einer sich quer über einen mittleren bis unteren Bereich davon erstreckende Schiene, die nach hinten kragt und mit darüber und darunter ausgebildeten, in einer Ebene liegenden Rückseitenbereichen ausgebildet.

In Figur 2 ist der erste Oberflächenbereich mit feinerer Oberflächenstruktur 8 und der zweite Oberflächenbereich mit gröberer Oberflächenstruktur 10 gut zu erkennen, dabei liegen beide Oberflächenbereiche 8 und 10 in derselben Ebene, nämlich in der Ebene der Spannbacken-Einspann-Oberfläche 4. Der erste Oberflächenbereich 8 und der zweite Oberflächenbereich 10 nehmen jeweils einen rechteckigen Bereich der Spannbacken-Einspann-Oberfläche 4 ein, wobei der erste Oberflächenbereich 8 angrenzend an die Austrittsseite 6 angeordnet ist und einen Bereich von etwa 10 - 30 % der gesamten Spannbacken-Einspann-Oberfläche 4 der Spannbacke 2 einnimmt. Beide Oberflächenbereiche 8 und 10 haben eine Oberflächenstruktur mit einem Muster aus Vertiefungen und Erhöhungen. Der erste, obere Oberflächenbereich 8 hat dabei eine feinere Oberflächenstruktur als der zweite Oberflächenbereich 10. Der erste Oberflächenbereich 8 mit der feineren Oberflächenstruktur ist zur Vermeidung von großen Eindruckspuren in den hochfesten Federdraht oder in das hochfeste Bandmaterial ausgebildet. Der zweite Oberflächenbereich 10 mit der gröberen Oberflächenstruktur 10 ist zum Aufbringen einer hohen Spannkraft auf den hochfesten Federdraht oder auf das hochfeste Bandmaterial in Zusammenwirkung mit einer hier nicht gezeigten gegenüberliegenden Spannbacke ausgebildet.

Figur 3 zeigt eine schematische Ansicht schräg von oben auf eine Einspannvorrichtung 14 zum Einspannen eines hochfesten Federdrahts oder eines hochfesten Bandmaterials.

Die Einspannvorrichtung 14 verfügt über ein Gehäuse mit einem Antrieb 16 sowie zwei Aufnahmen für ein Paar von Spannbacken 2 gemäß den Figuren 1 und 2, in die jeweils eine Spannbacke 2 gemäß den Figuren 1 und 2 passgenau mit ihrer Rückseite 12 eingesetzt ist. Die Spannbacken 2 sind dabei so in die Aufnahmen eingesetzt, dass ihre Spannbacken-Einspann-Oberflächen 4 einander gegenüberliegen, dass ihre ersten Oberflächenbereiche mit feinerer Oberflächenstruktur 8 und ihre zweite Oberflächenbereiche mit gröberer Oberflächenstruktur 10 jeweils einander gegenüber angeordnet sind, und dass ihre Austrittsseiten 6 und die ersten Oberflächenbereiche 8 jeweils oben angeordnet sind. Der Antrieb 14 ist so ausgebildet, dass die Spannbacken 12 motorisch oder hydraulisch aufeinander zu bewegt werden können, sodass sie einen Prüfling, insbesondere einen hochfesten Federdraht oder ein hochfestes Bandmaterialstück, dazwischen einspannen.

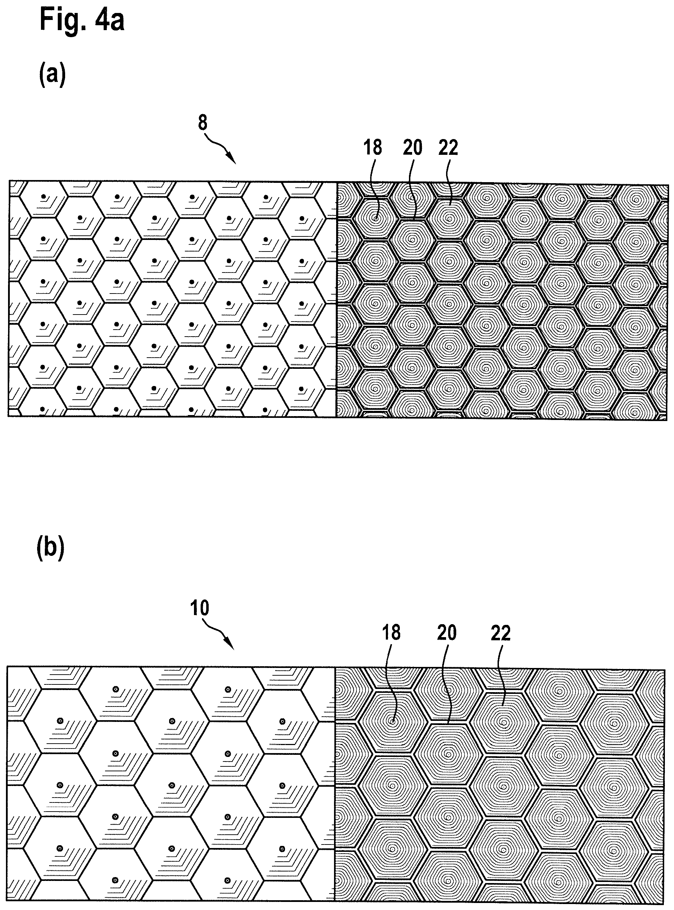

Figur 4 zeigt in ihrer Teilfigur 4(a) einen vergrößerten Ausschnitt eines Teils des ersten Oberflächenbereichs mit feinerer Oberflächenstruktur 8 und in ihrer Teilfigur 4(b) einen stark vergrößerten Ausschnitt des zweiten Oberflächenbereichs mit gröberer Oberflächenstruktur 10 der Spannbacke 2 aus den Figuren 1 und 2.

Die Aufnahmen wurden mit einem Rasterelektronenmikroskop gemacht.

Man erkennt sowohl für den ersten Oberflächenbereich 8 als auch für den zweiten Oberflächenbereich 10 ein jeweils übereinstimmendes regelmäßiges Muster aus Vertiefungen 20 und Erhöhungen 18, wobei die Elemente, nämlich die Vertiefungen 20 und Erhöhungen 18 bei dem ersten Oberflächenbereich mit feinerer Oberflächenstruktur 8 kleinere Abmessungen haben, sodass der erste Oberflächenbereich 8 eine feinere Oberflächenstruktur als der zweite Oberflächenbereich 10 aufweist, jedoch das gleiche Muster.

Die Erhöhungen sind als kegelförmige Erhöhungen 18 ausgeführt, die von in einem hexagonalen Netzmuster angeordneten grabenartigen Vertiefungen 20 umgeben sind. Die kegelförmigen Erhöhungen 18 erheben sich, insbesondere um eine Höhe von etwa 10 µm bis 500 µm aus einer Grundebene heraus, welche durch die grabenartigen Vertiefungen 20 gebildet wird.

Diese Höhe ist sowohl für den ersten Oberflächenbereich 8 mit feinerer Oberflächenstruktur als auch für den zweiten Oberflächenbereich 10 mit gröberer Oberflächenstruktur im Wesentlichen die gleiche.

Die kegelförmigen Erhöhungen 18 erstrecken sich, ausgehend von dem jeweils hexagonalen Grabenvertiefungs-Netz, das die jeweilige kegelförmige Erhöhung 18 umgibt, nach oben, gehen in eine gleichmäßig gekrümmte Kegelmantel-Fläche über und enden in einer Spitze.

Der Durchmesser einer kegelförmigen Erhöhung 18 liegt dabei beim ersten Oberflächenbereich mit feinerer Oberflächenstruktur 8 etwa bei 400 - 500 µm und bei dem zweiten Oberflächenbereich mit gröberer Oberflächenstruktur 10 bei etwa 800 µm bis 1 mm.

Des Weiteren kann man bei jeder der kegelförmigen Erhöhungen 18 jeweils eine Laserstrahlbahn 22 erkennen, die sich von dem unteren Bereich der jeweiligen kegelförmigen Erhöhung 18 spiralförmig verkleinernd bis zu dessen Spitze erstreckt und im Gegenuhrzeigersinn verläuft.

Die Laserstrahlbahn 22 hat dabei einen vertieften Abschnitt und einen nach innen gerichteten, erhöhten Randabschnitt. Ihre Breite liegt im Bereich zwischen 10 µm bis 100 µm.

An dieser Stelle wird darauf hingewiesen, dass die in Figur 4 gezeigte Oberflächenstruktur nur beispielhaft ist. Eine Vielzahl von anderen durch einen materialabtragenden lasereingebrachten Strukturen ist selbstverständlich ebenfalls möglich.

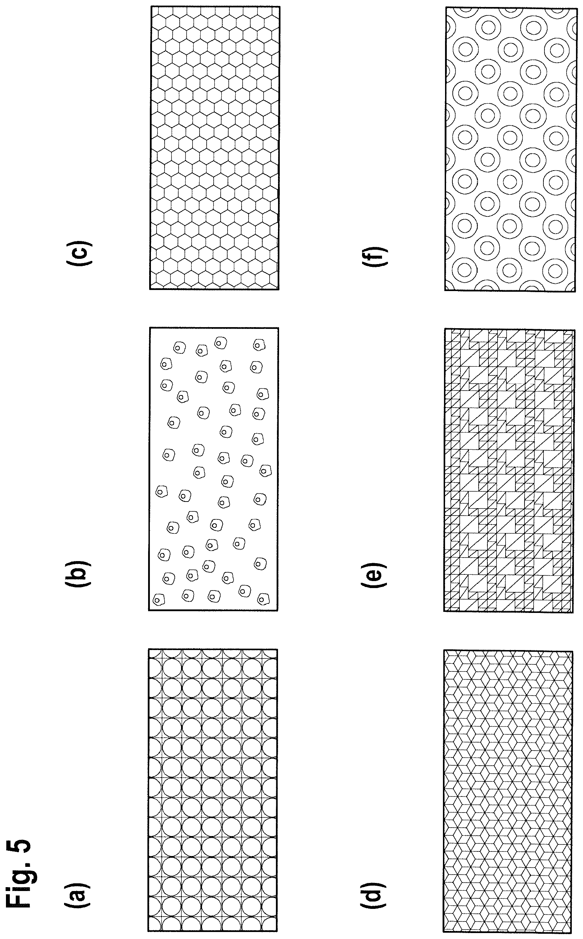

Figur 5 zeigt Draufsichten auf andere exemplarische Oberflächenstrukturen für den ersten Oberflächenbereich 8 mit feiner Oberflächenstruktur und / oder den zweiten Oberflächenbereich 10 mit gröberer Oberflächenstruktur, nämlich eine Zellstruktur (Figur 5(a)); eine Noppenstruktur (Figur 5(b)); eine Wabenstruktur (Figur 5(c)); eine Hexagonstruktur (Figur 5(d)); eine Riffelstruktur (Figur 5(e)), und eine Kreisnutenstruktur (Figur 5(f)).

Bei der Zellstruktur der Figur 5(a) und der Noppenstruktur der Figur 5(b) ist die Oberflächenstruktur des ersten und / oder zweiten Oberflächenbereichs 8, 10 mit einem gleichmäßigen Muster (Figur 5(a)) bzw. einem gleichmäßigen oder ungleichmäßigen Muster (Figur 5(b)) von aus einer Oberfläche herausstehenden Zellen oder Noppen ausgebildet.

Bei der Wabenstruktur der Figur 5(c) und der Hexagonstruktur gemäß Figur 5(d) ist die Oberflächenstruktur des ersten und / oder zweiten Oberflächenbereichs 8, 10 mit einem gleichmäßigen Muster aus Erhebungen in Waben- oder Hexagonalform und aus einem Netz von diese umgebenden Gräben ausgebildet.

Bei der Wabenstruktur liegen die Oberseiten der Erhebungen im Wesentlichen in einer oberen Ebene.

Bei der Hexagonstruktur sind die Erhebungen hügel- oder bergförmig, oder wie in Figur 4 gezeigt kegelförmig ausgebildet und von einem Netz aus hexagonalförmig angeordneten grabenartigen Vertiefungen umgeben.

Bei der Wabenstruktur sind die Erhebungen und das Netz aus diese umgebende grabenartigen Vertiefungen ebenfalls hexagonal dargestellt, es versteht sich jedoch von selbst, dass auch andere Muster, z. B. dreieckige (Triangelmuster), rechteckige Muster, fünfeckige Muster, sieben- oder mehreckige Muster gewählt werden können.

Bei der in Figur 5(e) gezeigten Riffelstruktur ist die Oberflächenstruktur des ersten und / oder zweiten Oberflächenbereichs 8, 10 mit einer Vielzahl von Erhebungen, insbesondere unterschiedlicher Form und / oder Größe und mit einem Netz aus diese umgebenden Gräben ausgebildet.

Bei der in Figur 5(f) gezeigten Kreisnutenstruktur ist die Oberflächenstruktur des ersten und / oder zweiten Oberflächenbereichs 8, 10 mit einem insbesondere gleichmäßigen Muster aus ringförmigen Vertiefungen in einer Oberfläche ausgebildet. Alternativ zu Kreisnuten können auch elliptische, ovale oder auch eckige Vertiefungen in die Oberfläche eingebracht sein.

Für den ersten Oberflächenbereich 8 und dem zweiten Oberflächenbereich 10 der Spannbacke 2 aus den Figuren 1 und 2 können jeweils gleiche Typen von Strukturmustern ausgewählt werden, und lediglich die Abmessungen der Strukturelemente kann bei dem ersten Oberflächenbereich mit feinerer Oberflächenstruktur kleiner sein als bei dem zweiten Oberflächenbereich mit gröberer Oberflächenstruktur.

Alternativ dazu können der erste Oberflächenbereich 8 und der zweite Oberflächenbereich 10 auch jeweils unterschiedliche Kombinationen der hier dargestellten und beschriebenen Oberflächenstrukturen aufweisen, wobei wiederum die Abmessungen der Strukturmerkmale bei dem ersten Oberflächenbereich mit feinerer Oberflächenstruktur kleiner sind als bei dem zweiten Oberflächenbereich mit gröberer Oberflächenstruktur.

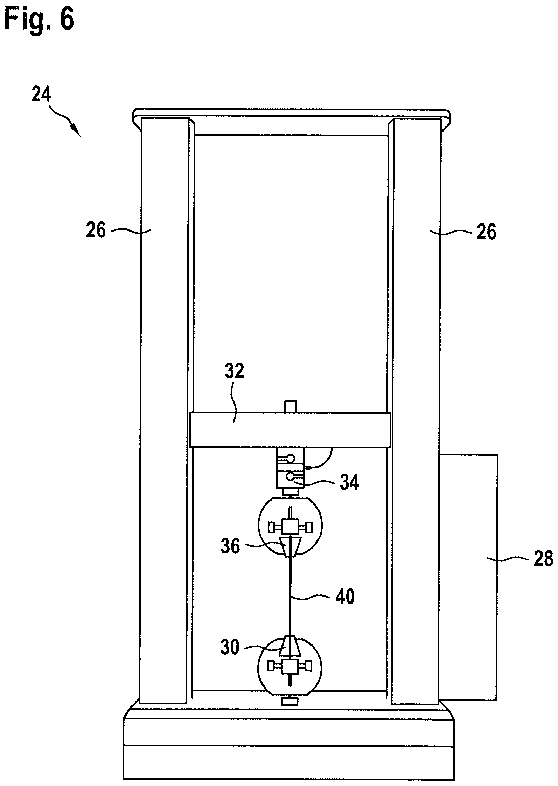

Figur 6 zeigt eine schematische Vorderansicht einer Zugprüfmaschine 24.

Diese umfasst ein Gestell mit zwei Standsäulen 26, ein unteres, insbesondere ortsfestes Querhaupt 28 mit einer unteren Spannvorrichtung 30, ein auf mittlerer Höhe, bezogen auf die Höhe der Standsäulen 26, angeordnetes bewegliches oberes Querhaupt 32, an dem mittig ein Kraftmesssystem 34, insbesondere eine Kraftmessdose befestigt ist und an der wiederum eine obere Einspannvorrichtung 36 anschließt.

Das bewegliche obere Querhaupt 32 kann über eine Antriebseinheit 38, die exemplarisch rechts neben der rechten Standsäule 26 angebracht ist, nach oben und nach unten verfahren werden.

Des Weiteren kann ein hier nicht gezeigter Extensometer vorgesehen sein.

Wenigstens eine der unteren Einspannvorrichtung 30 und der oberen Einspannvorrichtung 36 umfasst wenigstens eine Spannbacke 2, wie in den Figuren 1, 2 und 4 beschrieben. Vorzugsweise haben sowohl die untere Einspannvorrichtung 30 als auch die obere Einspannvorrichtung 36 zwei Spannbacken 2 der in den Figuren 1, 2 und 4 beschriebenen Art, und deren erster Oberflächenbereiche 4 sind jeweils zu der gegenüberliegenden Einspannvorrichtung 30, 36 hin gerichtet.

Bei der unteren Einspannvorrichtung 30 ist der erste Oberflächenbereich mit feinerer Oberflächenstruktur 8 der Spannbacken 2 oben gelegen und bei der oberen Einspannvorrichtung 36 ist der erste Oberflächenbereich mit feinerer Oberflächenstruktur 8 der Spannbacken 2 unten gelegen.

Ein Prüfling bzw. Werkstoff 40, insbesondere ein hochfester Federdraht oder ein hochfestes Bandmaterialstück, ist mit seinem oberen Ende zwischen den Spannbacken 2 der oberen Einspannvorrichtung 36 und mit seinem unteren Ende zwischen den Spannbacken 2 der unteren Einspannvorrichtung 30 eingespannt.

Nun wird das obere Querhaupt 32 mittels der Antriebseinheit 38 nach oben und von dem unteren Querhaupt 28 wegbewegt, und die Distanz der Wegbewegung wird gemessen.

Gleichzeitig wird durch das Kraftmesssystem 34 die Kraft bis zum Bruch des hochfesten Federdrahts oder des hochfesten Bandmaterials gemessen. Erfindungsgemäß kann somit auch bei hochfesten Federdrähten und hochfesten Bandmaterialien eine präzise Zugprüfung durchgeführt und die charakteristischen Werte, wie Spannung, Dehnung und Elastizitätsmodul können zuverlässig gemessen werden.

Ein Durchrutschen bzw. Herausrutschen des Prüflings aus einer oder beiden Einspannvorrichtungen 30, 36 wird vermieden. Ebenso wird ein Einspannbruch unmittelbar am Übergang zwischen Spannbacken 2 zu freier Länge zuverlässig verhindert.

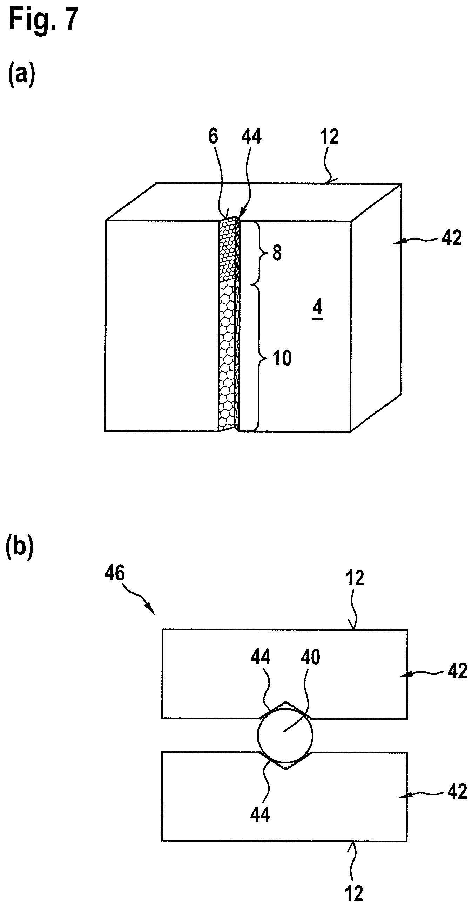

Figur 7 zeigt in ihrer Teilfigur 7 (a) eine perspektivische Ansicht schräg von vorne auf eine Spannbacke 42 gemäß einem weiteren Ausführungsbeispiel der Erfindung; und anhand ihrer Teilfigur 7 (b) eine Seitenansicht einer Einspannvorrichtung 46 mit einem eingespannten Prüfling 40.

Die Spannbacke 42 hat dabei, ebenso wie die in Figur 1 gezeigte Spannbacke 2 im Wesentlichen quaderförmige Grundgestalt, wobei die Rückseite 12 analog der Rückseite 12 der ersten Spannbacke 2 ausgestaltet sein kann und an eine entsprechende Aufnahme eines Antriebs (16, siehe Figur 3) einer Einspannvorrichtung (14, siehe Figur 3) angepasst sein kann.

In der Spannbacken-Einspann-Oberfläche 4, welche die Vorderseite der in der Figur 7 (a) gezeigten Spannbacke 42 bildet, ist eine rinnenartige oder kerbenartige Aufnahme oder Vertiefung 44 eingebracht, die sich in Figur 7 (a) in Längsrichtung über die Vorderseite der Spannbacke 2 erstreckt.

Der erste Oberflächenbereich mit feinerer Oberflächenstruktur 8 und der zweite Oberflächenbereich mit gröberer Oberflächenstruktur 10 erstrecken sich bei der Spannbacke 42 nur über die Oberfläche der rinnen- oder kerbenartigen Aufnahme oder Vertiefung 44.

Die Spannbacken-Einspann-Oberfläche 4 wird somit von der Oberfläche der Aufnahme oder Vertiefung 44 eingenommen.

Zudem können sich der erste Oberflächenbereich mit feinerer Oberflächenstruktur 8 und der zweite Oberflächenbereich mit gröberer Oberflächenstruktur 10 auch noch über die plane Vorderseite der Spannbacke 42, links und rechts der Vertiefung 44 erstrecken, was aber optional und in Figur 7 nicht gezeigt ist.

Bei der in Figur 7 (b) gezeigten Einspannvorrichtung 46 liegen zwei Spannbacken 42 der in Figur 7 (a) gezeigten Art einander gegenüber und zwar so, dass ihre rinnen- oder kerbenartigen Aufnahmen oder Vertiefungen 44 miteinander fluchten, und ihre ersten Oberflächenbereiche 8 mit feinerer Oberflächenstruktur sowie ihre zweiten Oberflächenbereiche 10 mit gröberer Oberflächenstruktur jeweils einander gegenüberliegen.

Wie gut zu erkennen ist, ist ein Prüfling 40, insbesondere ein hochfester Federdraht oder ein hochfestes Bandmaterialstück, mit einem seiner beiden Enden zwischen den Spannbacken 42 der Einspannvorrichtung 46 in den rinnenartigen Aufnahmen oder Vertiefungen 44 der beiden Spannbacken 42 aufgenommen und eingespannt.

Das gegenüberliegende Ende des Prüflings 40 kann dabei ebenfalls auf gleiche oder ähnliche Weise von einer analogen Einspannvorrichtung eingespannt sein.

Die Einspannvorrichtung 46 mit den Spannbacken 42 kann auch in der Zugprüfmaschine 24 der Figur 6 zum Einsatz kommen.

Die obere Kante bzw. obere rechtwinklig zu der Vorderseite der Spannbacke 42 angeordnete Stirnfläche bildet die Austrittsseite 6 für einen von der Spannbacke 42 und einer gegenüberliegenden Spannbacke (Figur 7 (b)) einzuspannenden Prüfling (hochfester Federdraht oder hochfestes Bandmaterial).

Die Oberflächenstrukturen des ersten Oberflächenbereichs mit feiner Oberflächenstruktur 8 und des zweiten Oberflächenbereichs mit gröberer Oberflächenstruktur 10 können mittels eines materialabtragenden Lasers erzeugt werden oder worden sein. Dies ist besonders kostengünstig und automatisiert durchführbar.

Jedoch ist die Erfindung nicht darauf beschränkt. Alternativ dazu können die Oberflächenstrukturen in dem ersten Oberflächenbereich 8 mit feinerer Oberflächenstruktur und in dem zweiten Oberflächenbereich 10 mit gröberer Oberflächenstruktur auch durch Erodieren oder Fräsen, insbesondere Hartfräsen erzeugt werden / worden sein.

Für weitere Vorteile und Einzelheiten wird auf den allgemeinen Beschreibungsteil verwiesen.

### Bezugszeichenliste

- 2: Spannbacke
- 4: Spannbacken-Einspann-Oberfläche
- 6: Austrittsseite
- 8: erster Oberflächenbereich mit feinerer Oberflächenstruktur
- 10: zweiten Oberflächenbereich mit gröberer Oberflächenstruktur
- 12: Rückseite
- 14: Einspannvorrichtung
- 16: Antrieb
- 18: kegelförmige Erhöhungen
- 20: grabenartige Vertiefungen
- 22: Laserstrahlbahn
- 24: Zugprüfmaschine
- 26: Standsäulen
- 28: unteres Querhaupt
- 30: untere Einspannvorrichtung
- 32: bewegliches oberes Querhaupt
- 34: Kraftmesssystem
- 36: obere Einspannvorrichtung
- 38: Antriebseinheit
- 40: Prüfling bzw. Werkstoff (hochfester Federdraht oder hochfestes Bandmaterialstück)
- 42: Spannbacke
- 44: rinnen- oder kerbenartige Aufnahme oder Vertiefung
- 46: Einspannvorrichtung

## Patentansprüche

1. Spannbacke (2) für eine Einspannvorrichtung (14, 30, 36) zum Einspannen eines auf Zug zu belastenden Werkstoffes, insbesondere eines hochfesten Federdrahts oder eines hochfesten Bandmaterials, aufweisend
einer Spannbacken-Einspann-Oberfläche (4) mit einem ersten Oberflächenbereich (8) benachbart einer Austrittsseite und mit einem zweiten Oberflächenbereich (10);
wobei der erste Oberflächenbereich (8) und der zweite Oberflächenbereich (10) jeweils eine Oberflächenstruktur mit einem Muster aus Vertiefungen (20) und Erhöhungen (18) aufweisen;
wobei der erste Oberflächenbereich (8) eine feinere Oberflächenstruktur aufweist als der zweite Oberflächenbereich (10);
wobei die Erhöhungen (18) und Vertiefungen (20) des ersten Oberflächenbereichs (8) mit feinerer Oberflächenstruktur kleinere Abmessungen aufweisen als die Erhöhungen (18) und Vertiefungen (20) des zweiten Oberflächenbereichs (10) mit gröberer Oberflächenstruktur; und
wobei die Höhe der Erhöhungen (18) aus der Grundebene heraus sowohl für den ersten Oberflächenbereich (8) mit feinerer Oberflächenstruktur als auch für den zweiten Oberflächenbereich (10) mit gröberer Oberflächenstruktur im Wesentlichen die gleiche ist..

2. Spannbacke (2) nach Anspruch 1,
wobei der erste Oberflächenbereich (8) mit der feineren Oberflächenstruktur zur Vermeidung von zu großen Eindruckspuren in den hochfesten Federdraht oder in das hochfeste Bandmaterial ausgebildet ist;
wobei der zweite Oberflächenbereich (10) mit der gröberen Oberflächenstruktur zur Aufbringen einer hohen Spannkraft auf den Werkstoff, insbesondere auf den hochfesten Federdraht oder auf das hochfeste Bandmaterial in Zusammenwirkung mit einer gegenüberliegenden Spannbacke (2) ausgebildet ist.

3. Spannbacke (2) nach Anspruch 1 oder 2,
wobei die Oberflächenstruktur des ersten und/oder zweiten Oberflächenbereichs (8, 10) ein insbesondere regelmäßiges Muster aus Erhöhungen (18) und/oder Vertiefungen (20) aufweist.

4. Spannbacke (2) nach einem der vorhergehenden Ansprüche,
wobei die Oberflächenstruktur des ersten Oberflächenbereichs (8) und des zweiten Oberflächenbereichs (10) durch eine Laserstrukturierung, durch Erodieren oder durch Fräsen, insbesondere Hartfräsen erzeugt worden ist.

5. Spannbacke (2) nach einem der vorhergehenden Ansprüche,
wobei die Erhöhungen (18) und/oder Vertiefungen (20) eine Oberfläche mit einer Bahnstruktur aufweisen, insbesondere mit einer wenigstens bereichsweise durchgehenden Laserstrahlbahn (22) mit einem vertieftem Abschnitt und wenigstens einem erhöhten Randabschnitt;
wobei die Breite der Laserstrahlbahn (22) im Bereich von 1 µm bis 100 µm liegt.

6. Spannbacke (2) nach einem der vorhergehenden Ansprüche,
wobei die Erhöhungen (18) sowohl des ersten Oberflächenbereichs (8) mit feinerer Oberflächenstruktur als auch des zweiten Oberflächenbereichs (10) mit gröberer Oberflächenstruktur aus einer Grundebene herausstehen, insbesondere mit Abmessungen im Bereich von 10 µm bis 500 µm; und/oder
wobei sich die Vertiefungen (20) sowohl des ersten Oberflächenbereichs (8) mit feinerer Oberflächenstruktur als auch des zweiten Oberflächenbereichs (10) mit gröberer Oberflächenstruktur aus der Ebene der Oberfläche bis zu einer Tiefe von 10 µm bis 500 µm in die Spannbacke (2) hinein erstrecken.

7. Spannbacke (2) nach einem der vorhergehenden Ansprüche,
wobei die Erhöhungen (18) jeweils zahnförmig, kegelförmig, pyramidenförmig, zellenförmig, noppenförmig oder wabenförmig ausgebildet sind; und/oder
wobei eine einzelne Erhöhung (18) jeweils eine Fläche von 200 µm² bis 2 mm² des ersten und/oder zweiten Oberflächenbereichs (8, 10) einnimmt; und
wobei insbesondere die Erhöhungen (18) in dem ersten Oberflächenbereich (8) mit feinerer Oberflächenstruktur einen Durchmesser von etwa 400 bis 500 µm aufweisen und die Erhöhungen (18) in dem zweiten Oberflächenbereich (10) mit gröberer Oberflächenstruktur einen Durchmesser von 800 µm bis 1 mm aufweisen.

8. Spannbacke (2) nach einem der vorhergehenden Ansprüche,
wobei die Oberflächenstruktur des ersten und/oder zweiten Oberflächenbereichs (8, 10) als Zellstruktur oder als Noppenstruktur ausgebildet ist, mit einem insbesondere gleichmäßigen Muster von aus einer Oberfläche herausstehenden Zellen oder Noppen;
wobei die Oberflächenstruktur des ersten und/oder zweiten Oberflächenbereichs (8, 10) als Wabenstruktur oder als Hexagonstruktur ausgebildet ist, mit einem insbesondere gleichmäßigen Muster aus Erhebungen in Waben- oder Hexagonalform und aus einem Netz von diese umgebenden Gräben; oder
wobei die Oberflächenstruktur des ersten und/oder zweiten Oberflächenbereichs (8, 10) als Riffelstruktur ausgebildet ist, mit einer Vielzahl von Erhebungen, insbesondere unterschiedlicher Form und/oder Größe und mit einem Netz aus diese umgebenden Gräben; oder
wobei die Oberflächenstruktur des ersten und/oder zweiten Oberflächenbereichs (8, 10) als Kreisnutenstruktur ausgebildet ist, mit einem insbesondere gleichmäßigen Muster aus ringförmigen Vertiefungen (20) in einer Oberfläche.

9. Spannbacke (2) nach einem der vorhergehenden Ansprüche,
wobei die Spannbacke (2) eine Austrittskante (6) aufweist, über die der einzuspannende Werkstoff die Oberfläche (4) der Spannbacke (2) verlässt;
wobei der erste Oberflächenbereich (8) mit der feineren Oberflächenstruktur zur Vermeidung von zu großen Eindruckspuren in den Werkstoff, insbesondere in den hochfesten Federdraht oder in das hochfeste Bandmaterial benachbart der Austrittskante angeordnet ist; und/oder
wobei der zweite Oberflächenbereich (10) mit der gröberen Oberflächenstruktur neben dem ersten Oberflächenbereich (8) mit der feineren Oberflächenstruktur und beabstandet von der Austrittskante (6), insbesondere angrenzend an eine rückwärtige Kante der Oberfläche der Spannbacke (2), die der Austrittskante gegenüberliegt (6), angeordnet ist.

10. Spannbacke (2) nach einem der vorhergehenden Ansprüche,
wobei der erste Oberflächenbereich (8) mit der feineren Oberflächenstruktur und der zweite Oberflächenbereich (10) mit der gröberen Oberflächenstruktur jeweils einem rechteckigen Bereich der Oberfläche der Spannbacke (2) einnehmen; und
wobei der erste Oberflächenbereich (8) mit der feineren Oberflächenstruktur einen Bereich von etwa 10 bis 30 % der Gesamtoberfläche der Spannbacke (2) einnimmt.

11. Spannbacke (2) nach einem der vorhergehenden Ansprüche,
wobei der erste Oberflächenbereich (8) und der zweite Oberflächenbereich (10) in einer Ebene liegen.

12. Spannbacke (42) nach einem der vorhergehenden Ansprüche,
wobei der erste Oberflächenbereich (8) und der zweite Oberflächenbereich (10) in einer rinnenartigen Aufnahme oder Vertiefung (44) der Oberfläche (4) der Spannbacke (42) ausgebildet sind; und/oder
wobei sich die rinnenartige Aufnahme oder Vertiefung (44) insbesondere längs über die gesamte Oberfläche (4) der Spannbacke (42) erstreckt; und/oder
wobei die rinnenartige Aufnahme oder Vertiefung (44) im Querschnitt gesehen gerundet oder spitz zulaufend ausgeführt ist.

13. Spannbacke (42) nach einem der vorhergehenden Ansprüche,
wobei der erste und der zweite Oberflächenbereich (8, 10) übergangsbereichslos aneinander angrenzen; oder
wobei zwischen dem ersten und dem zweiten Oberflächenbereich (8, 10) ein Übergangsbereich angeordnet ist.

14. Einspannvorrichtung (14, 30, 36, 46) zum Einspannen eines auf Zug zu belastenden Werkstoffes, insbesondere eines hochfesten Federdrahts oder eines hochfesten Bandmaterials, aufweisend
zwei gegeneinander spannbare Spannbacken (2, 42), wobei wenigstens eine der Spannbacken (2, 42) gemäß einem der vorhergehenden Ansprüche ausgebildet ist;
wobei insbesondere beide gegeneinander spannbaren Spannbacken (2, 42) gemäß einem der Ansprüche 1 bis 11 ausgebildet und so gegenüber voneinander angeordnet sind, dass ihre ersten und zweiten Oberflächenbereiche (8, 10) insbesondere deckungsgleich einander gegenüberliegen.

15. Zugprüfmaschine (24) für einen auf Zug zu prüfenden Werkstoff, insbesondere für einen hochfesten Federdraht oder für ein hochfestes Bandmaterial, aufweisend
eine obere Einspannvorrichtung (36) zum Einspannen des oberen Endes des Werkstoffes;
eine untere Einspannvorrichtung (36) des unteren Endes des Werkstoffes; eine Antriebseinheit (38), insbesondere eine Antriebsspindel oder ein Antriebskolben, die dazu angeordnet und ausgebildet ist, die untere Einspannvorrichtung (30) von der oberen Einspannvorrichtung (36) oder die obere Einspannvorrichtung (36) von der unteren Einspannvorrichtung (30) wegzubewegen und die Distanz der Wegbewegung zu messen; und
ein Kraftmesssystem (34), das insbesondere mit der oberen Einspannvorrichtung (36) oder der unteren Einspannvorrichtung (30) verbunden und dazu ausgebildet ist, die Kraft bis zum Bruch des Werkstoffes zu messen;
wobei wenigstens eine der oberen und unteren Einspannvorrichtung (30, 36) nach einem der Ansprüche 15 oder 16 ausgebildet und so angeordnet ist, dass der oder die ersten Oberflächenbereiche (8) mit der feineren Oberflächenstruktur zu der jeweils gegenüberliegenden Einspannvorrichtung (36, 30) hin gerichtet ist.
